Europäisches Patentamt

European Patent Office

Office européen des brevets

(11) Publication number: **0 624 710 A1**

## EUROPEAN PATENT APPLICATION

(21) Application number: **93107271.4**

(22) Date of filing: **05.05.93**

(51) Int. Cl.⁵: **E21B 33/138**, E21B 43/32,
B01F 17/00, C08F 220/38

(43) Date of publication of application:
**17.11.94 Bulletin 94/46**

(84) Designated Contracting States:
**AT BE CH DE DK ES FR GB GR IE IT LI LU MC
NL PT SE**

(71) Applicant: **MINNESOTA MINING AND
MANUFACTURING COMPANY
3M Center,
P.O. Box 33427
St. Paul, Minnesota 55133-3427 (US)**

(72) Inventor: **Rudolf J. Dams 3M Company
(Antwerp)
Canadastraat 11
B-2070 Zwijndrecht (BE)**

(74) Representative: **Meyers, Hans-Wilhelm, Dr. et
al
Patentanwälte
von Kreisler-Selting-Werner
Postfach 10 22 41
D-50462 Köln (DE)**

(54) **A foamable oil well-treatment-fluid.**

(57) A foamable, oil well treatment fluid comprising at least one fluorochemical surfactant that is:
 a) substantially soluble in crude oil, and
 b) substantially insoluble in water,
wherein the fluid is capable of forming a foam barrier under typical oil well conditions that is effective in reducing gasconing for at least four days.

EP 0 624 710 A1

One aspect of this invention relates to a foamable, oil well treatment fluid comprising a fluorochemical surfactant. Another aspect of this invention relates to a polymeric fluorochemical surfactant which is obtainable by polymerizing one or more fluorine-containing ethylenically unsaturated monomers and one or more fluorine-free ethylenically unsaturated monomers.

Most oil wells produce natural gas as a byproduct. While natural gas may be a valuable byproduct of oil production in some oil fields, in many others it is a hazardous waste product that must be disposed of (e.g., by burning) on site because it cannot be economically transported from the oil wells to the market. Also, excess natural gas production from an oil well can make recovery of oil from the well difficult and uneconomical. This particularly may be a problem in "thin-rim" oil fields (i.e., those oil fields having an oil layer 10 to 200 meters thick) such as those found in the North Sea. In some such oil fields, natural gas production is sufficiently large to result in the formation of a "gas vortex" in the well during oil production. This condition is known as "gasconing" and generally adversely impacts the economic extraction of oil from such wells. Thus, it would be very useful to develop a method of reducing the natural gas production of oil wells, and particularly of reducing or eliminating gasconing.

Various researchers have reported that foam-forming fluids can be injected into wells to stimulate oil production. (For example, see U.S. Patent Nos.

3,529,668 (Bernard et al) and 4,557,837 (Clark III et al.)). Clark III et al. describes the use of a foam-forming fluid that contains methanol and a polymeric fluorochemical having three or more fluorochemical moieties linked by divalent groups to the polymer backbone.

Clark III et al. also reported at the "1979 SPE of AIME International Symposium on Oil Field and Geothermal Chemistry" held in Houston, Texas on January 22-26, 1979 that certain fluorochemical sufactants were useful as crude oil foaming agents, however none of the disclosed surfactants are believed to be useful in preventing gasconing.

U.S. Patent No. 4,903,771 (Hanssen et al.) describes a method of reducing or eliminating gasconing by injection of a foam-forming fluid into an oil well. The fluid forms a foam in the well that blocks natural gas infiltration from the surrounding geologic strata into the oil well. Some of Hanssen et al.'s fluids contain water-soluble perfluoroalkanoic acids and salts having 3 to 24 carbon atoms.

It is believed that none of the aforementioned references describe or suggest foamable fluids like those of the instant invention or suggest that the foams of the instant invention will be more effective at reducing or eliminating gasconing than those of the prior art. In fact, Hanssen et al. reported at the "SPE/DOE Seventh Symposium of Enhanced Oil Recovery" held in Tulsa, Oklahoma on April 22-25, 1990 that it is difficult to predict whether a particular foam composition will be effective at reducing gasconing. While Hanssen et al. also reported that all surfactants useful in gas blocking foams were fluorosurfactants, they also acknowledged that not all fluorosurfactant- containing foams were effective at reducing or eliminating gasconing (SPE/DOE 20193, 7th symposium on Enhanced Oil Recovery held in Tulsa, Oklahoma, April 22-25, 1990 ; p 213 right column, line 9 et seq. and 215, conclusion 4).

Concerning the fluorosurfactants of this invention, U.S. Pat. No. 3,330,812 (Smith et al.) describes vinyl polymers containing perfluorocarbon groups and acyl halide groups derived from an ethylenically unsaturated fluorocarbon monomer, e.g., N-methyl perfluorooctane-sulfonamidoalkylacrylates, and an ethylenically unsaturated acyl halide radical containing monomer, e.g. acryloyl chloride. The fluorine-containing copolymers are described as being useful as surface treating agents, and durable oil and water repellants.

U.S. Patent No. 3,787,351 (Olson) describes relatively low molecular weight linear, branched, or lightly crosslinked oligomeric fluoroaliphatic polymers containing from 3 to 30 monomer units. The molecular weights of materials described in this reference are believed to be lower than 20,000.

Rodriguez et al. discloses in US Patent No. 5,098,446 fluorochemical oligomers having a plurality of pendant fluoroaliphatic groups $R_f$ linked to watersolubilizing moieties selected from anionic, cationic, nonionic and amphoteric moieties, and compatible combinations of such moieties which are preferably poly-(oxyalkylene) moieties. These fluorochemical oligomers are generally non-ionic, normally liquid or low-melting solids. They have about 5 to 40 weight percent, preferably about 10 to 30 weight percent carbon-bonded fluorine based on the weight of oligomer, the fluorine content residing in said plurality of pendant fluoroaliphatic radicals. These materials are relatively low molecular weight linear polymers or lightly crosslinked polymers, containing from 3 to 4 up to about 25 or 30 monomer units and thus are oligomeric. The compounds are used in leather manufacturing processes.

U.S. Patent No. 3,574,791 (Sherman et al.) describes hybrid polymers having fluorochemical and hydrophilic polyether moieties bonded through sulfur atoms. The Sherman et al. polymers are described as useful oil and water repellent treatments.

In one aspect, the invention provides a foamable, oil well treatment fluid comprising one or more fluorochemical surfactants that are: substantially soluble in crude oil, substantially insoluble in water and capable of forming a foam barrier under typical oil well conditions that is effective in reducing gasconing for at least four, preferably at least 10 days, particularly preferred at least 14 days.

For the purposes of this invention, "substantially soluble in crude oil" means that at least one (1) gram of the fluorochemical surfactant can be dissolved in one thousand (1000) grams of a nonpolar liquid, such as crude oil, at typical oil well conditions (hereinafter defined). Preferably, not more than one hundred (100) grams of the fluorochemical surfactant will be dissolvable in one thousand (1000) grams of a nonpolar liquid at typical oil well temperatures, or the gas blockage performance of the foamable fluid will be adversely impacted.

For the purposes of this invention the language, "typical oil well conditions" collectively includes "typical oil well temperatures (i.e., temperatures 30 to 100°C) and "typical oil well pressures" (i.e., pressures of 135 bar to 830 bar). The exact typical oil well conditions existing in a particular application depend, among other things, upon the well location, well depth and the concentration of natural gas occurring in the oil well.

For the purposes of this invention, "substantially insoluble in water" means that less than one (1) gram of the surfactant can be dissolved in one thousand (1000) grams of water at the aforementioned typical oil well conditions.

In another aspect, the invention provides a copolymeric fluorochemical compound having a weight average molecular weight of at least 20,000, preferably at least 50,000, that consists or consists essentially of interpolymerized units derived from the following comonomers:

$$R_f QCR^1 = CR^2R^3 \qquad (I)$$

where:

$R_f$ is a fluoroaliphatic radical,

Q is an organic linking group and

$R^1$, $R^2$ and $R^3$ are independently selected from the group consisting of hydrogen, halogen atoms, phenyl radicals, lower alkyl radicals and combinations thereof, and

$$R_H CR^1 = CR^2R^3 \qquad (II)$$

where:

$R_H$ is an essentially fluorine-free radical, and

$R^1$, $R^2$ and $R^3$ are as defined above.

The copolymeric fluorochemical compounds can be used as surfactants and are particularly useful in the foamable, oil well treatment fluids of this invention.

The weight average molecular weight of the copolymeric fluorochemical compounds are determined using gel permeation chromatography on a polystyrene cross-linked with divinylbenzene chromatography material (having a particle size of about 10 $\mu$m). Typically, a solution containing 0.25% by weight is prepared in tetrahydrofuran. The injection volume is about 400 $\mu$l. The flow rate for determination is 1 mL/min and temperature is 40°C. The standard compound is polystyrene.

The fluorochemical surfactants useful in the foamable, oil well treatment fluids of this invention are substantially soluble in crude oil and substantially insoluble in water and contain at least one fluorochemical moiety and at least one oleophilic, fluorine-free moiety. Preferably, the number of oleophobic and oleophilic moieties are balanced in order to provide optimal physical and chemical properties such as solubility, surface tension reduction and foamability.

Some of the fluorochemical surfactants useful in the foamable, oil well treatment fluids of this invention are known, but until now their ability to reduce or eliminate gasconing was not appreciated. Other fluorochemical surfactants useful in the foamable oil well treatment fluids, specifically the copolymeric fluorochemical compounds described above, are novel.

The fluorochemical surfactants useful in this invention contain from about 5 to 80% by weight, and more preferably, from about 10 to 65% by weight of fluorine based on the total weight of the surfactant.

Known fluorochemical surfactants useful in this invention include:

(1) $C_8F_{17}CH_2CH_2SCH_2CH_2OCH_2CH_2OH$ as described in example 1 of U.S. Patent No. 4,266,080 (Falk);

(2) $R_fCH_2CH_2SCH_2CH(CH_2OH)O(CH_2CH_2O)_6[CH(CH_3)CH_2O]_{56}(CH_2CH_2O)_6H$ as described in example 4 of U.S. Patent No. 4,997,580 (Karydas et al)

(3) ethylene-propylene copolymers grafted with isocyanatoethylacrylate and further reacted with a fluorochemical alcohol, as described in example 2 of U.S. Patent No. 4,973,413 (De Rosa et al.);

(4) a terpolymer of a C22 alkyl acrylate $CF_3CF_2(CF_2)_kC_2H_4OC(O)CH = CH_2$ (where k is an even number from 4 to 12) and 4-vinylpyridine, as described in U.S. Patent No. 4,900,569 (Le);

(5) $C_6F_{13}CH_2CH_2OCH_2CH(CH_2Cl)OCH_2CH(OH)CH_2N(CH_2CH_2OH)_2$ as described in example 1 of EP 0 435 219 A2 (Knaup et al.); and

(6) $R_f[CH_2CH(CONH_2)]_{17}$-I as described in example 7 of EP 0 281 430 A1 (Robin et al.) and prepared according to EP 0 189 698 B1.

The novel fluorochemical surfactants useful in the foamable, oil well treatment fluids of this invention are copolymeric compounds having a weight average molecular weight of at least 20,000, preferably at least 50,000, that consist or consist essentially of interpolymerized units derived from the following comonomers:

$$R_fQCR^1 = CR^2R^3 \qquad (I)$$

where:

$R_f$ is a fluoroaliphatic radical, and preferably is a perfluorinated radical,

Q is an organic linking group, and

$R^1$, $R^2$ and $R^3$ are independently selected from the group consisting of hydrogen, halogen atoms (e.g., fluorine, chlorine and bromine), lower alkyl groups (e.g., straight- or branched-chain alkyl moieties of 1 to 8 carbon atoms), substituted and non-substituted phenyl groups and combinations thereof, and

$$R_HCR^1 = CR^2R^3 \qquad (II)$$

where:

$R_H$ is an essentially (i.e., less than 0.5 weight percent fluorine) fluorine-free radical, that preferably contains hydrocarbon or siloxane moieties, and that optionally contains oxygen, nitrogen, and sulfur atoms or combinations thereof, and

$R^1$, $R^2$ and $R^3$ are as described above.

The $R_f$ group of the novel fluorochemical surfactants can be a straight chain or branched chain alkyl group or a cyclic alkylene group or a combination thereof. The $R_f$ group contains at least 3, and preferably 6 to 14, carbon atoms. $R_f$ is preferably free of polymerizable olefinic unsaturated moieties and may contain heteroatoms such as oxygen, divalent or hexavalent sulfur or nitrogen atoms. It is preferred that $R_f$ contains about 40 to 80% fluorine by weight and that the terminal portion of the $R_f$ group be fully fluorinated and contains at least 7 fluorine atoms, e.g. $CF_3CF_2CF_2$-, $(CF_3)_2CF$-, $F_5SCF_2$- or the like. Preferably, $R_f$ is perfluorinated.

Preferably, the Q group of the novel fluorochemical surfactants contains at least 1 carbon atom and may contain oxygen, nitrogen, sulfur or silicone atoms. Preferably, Q is free of functional groups that will substantially interfere with free radical polymerization reactions (such as thiols, easily abstracted hydrogens and other functionalities known to those skilled in the art). Representative examples of Q groups include straight chain alkylene, branched chain alkylene, cyclic alkylene, arylene, aralkylene, alkyleneoxy, alkyleneoxo, alkylenehydroxy, alkylenethio, sulfonyl, sulfoxy, amino, imino, sulfonamido, carboxamido, and carbonyloxy groups and combinations thereof such as sulfonamido alkylene groups.

Preferred Q groups include:

- $SO_2N(R')(CH_2)_kOCO$ -
- $CON(R')(CH_2)_kOCO$ -
- $(CH_2)_kOCO$ -
- $(CH_2)_kSO_2$ -
- $CH_2CH(OH)$-$CH_2OCO$ -
- $(CH_2)_kS(CH_2)_kOCO$ -
- $(CH_2)_kO[CH_2CH(CH_2Cl)O]_kCO$ -
- $(CH_2)_kO(CH_2CH_2O)_k[CH(CH_3)CH_2O]_qCO$ -

where k and q are integers between 1 and 100.

R' is selected from the group consisting of hydrogen, straight chain or branched-chain alkyl moieties of 1 to 6 carbon atoms and substituted and unsubstituted phenyl moieties.

Many of the fluoroaliphatic-group-containing monomers (I) are known. (See, for example U.S. Patent Nos. 2,803,615 and 2,841,573). Examples of such compounds include fluorochemical acrylates, methacrylates, vinylethers and the like.

Preferred fluoroaliphatic-group-containing monomers are N-ethyl and N-methyl perfluorooctane sulfonamido alkyl(meth)acrylates and $C_nF_{2n+1}$-$CH_2CH_2OC(O)$-$C(R_4) = CH_2$, wherein $R_4$ is hydrogen or methyl and n is 6, 8, 10, 12, 14, 16 or 18.

4

The comonomers (II) are also known and are commercially available. Examples of such compounds include those ethylenically unsaturated compounds capable of free radical polymerization such as ethylene, propylene, butadiene, isoprene, chloroprene; vinyl, allyl or vinylidene halides (such as vinyl, vinylidene chloride and allyl bromide); styrene and its derivatives; vinyl esters (such as vinyl acetate); allyl esters (such as allyl acetate); alkyl vinyl or alkyl allyl ether (such as ethyl vinyl ether); vinyl allyl ketones; unsaturated acids (such as acrylic, alpha-fluoro acrylic and maleic), anhydrides and esters thereof (such as dimethylmaleate, vinyl, allyl, methyl, ethyl, butyl, 2-methylhexyl, lauryl or stearyl acrylate and methacrylate); nitriles (such as acrylonitrile); special (meth)acrylates (such as isobornyl acrylate and methacrylate); acrylamides and methacrylamides; mono- or di(meth)acrylates of glycols, polyalkylene glycols or methoxy polyalkylene glycols or block copolymers of ethyleneoxide and propyleneoxide endcapped by hydroxy groups or siloxane mono-, di- or polyols; mono- or di(meth)acrylamides of amino or diamino terminated polyethers or siloxane mono-, di- or polyamines; functionalized ethylenically unsaturated monomers such as N-methylol acrylamide, 2-hydroxy-3-chloropropylmethacrylate, glycidyl methacrylate, 4-vinylpyridine, N-vinylpyrrolidone and the like. Preferred monomers are acrylates and methacrylates such as methylmethacrylate, 2-ethylhexylmethacrylate, dodecylmethacrylate, octadecylmethacrylate, methoxyethyleneglycolacrylate, e.g. CARBOWAX 750-acrylate and PLURONIC 44-acrylate.

The ratio of monomer (I) and monomer(II) in the copolymeric fluorochemical surfactant is selected in such a way that the resulting polymer is substantially soluble in crude oil, substantially insoluble in water and capable of forming a foam barrier that is effective in reducing gasconing for at least four, preferably at least 10 days at typical oil well conditions. Generally, the ratio of monomer (I) to monomer (II) will be between 10:90 to 90:10, and preferably is between 30:70 to 80:20.

The novel fluorochemical surfactant of the invention can be prepared by methods known to those skilled in the art such as free radical polymerization or cationic or anionic polymerization of the respective comonomers. The polymers can be prepared using known solution, emulsion, suspension or bulk polymerization techniques.

If the novel fluorochemical surfactants are prepared by free radical polymerization, an initiator should be used. Such radical chain initiators are known to the skilled person and include persulfates, azocompounds, peroxides, hydroperoxides, peroxyesters and the like. Typically, about 0.01 to 1.5% by weight of initiator is used.

The polymerization can be carried out in any solvent suitable for organic free radical reactions. To achieve the desired molecular weight of the surfactant, solvents containing groups causing chain transfer reactions should be eliminated or only be present in minor amounts. Examples of suitable solvents include aliphatic and alicyclic hydrocarbons like heptane, aromatic solvents (for example, toluene), ethers (for example, diglyme), esters (such as butylacetate or ethylacetate), ketones, (for example, methylisobutylketone), sulfoxides (such as dimethylsulfoxide), amides $\alpha,\alpha,\alpha$-trifluorotoluene), water and the like and mixtures thereof. The polymerization can be carried out at any suitable concentration of the comonomers, e.g. about 5% to 90% by weight based on the total weight of the reaction mixture.

The polymerization can be carried out at any temperature suitable for conducting an organic free radical reaction. Particularly, the polymerization temperature and solvents will be selected by those skilled in the art based on considerations such as solubility of reagents, the temperature required for the use of a particular initiator and so on.

Generally, suitable polymerization temperatures are between about 30°C and 150°C. The reaction time is the time required for essentially complete polymerization of all monomers involved and will depend on the type of monomers, type and concentration of initiator, nature of solvent and so on.

Preferably, a low amount of initiator is used (0.1 to 0.5 weight percent of the total weight of monomers) along with reaction conditions that will generate radicals slowly over an extended period of time (such as obtained by using azobisisobutyronitrile (AIBN) initiator at 65°C) and avoid chain transfer reactions.

The foamable oil well treatment fluid of this invention can be prepared by dissolving the fluorochemical surfactant of choice in one or more nonpolar solvents such as liquids derived from certain high viscous kerosene fractions, white spirit fractions, crude oil, gasoline and the like. The concentration of the surfactant in the solution should be between 0.1 and 10% by weight, and preferably is between 0.5 and 5 % by weight.

The oil well treatment fluid may also contain other known additives such as foam stabilizers e.g. silicone surfactants, such as those available from Dow Corning as X-0483, polyacrylates such as polyoctylmethacrylate, hydrocarbon foaming extenders such as polyalkylene glycols available from Union Carbide Corporation as CARBOWAX and from BASF as PLURONIC or TETRONIC, viscosifiers such as high viscosity kerosene fractions, carboxycellulose esters, amides of fatty acids, certain polyacrylamides and the like. Organic co-solvents can also be present such as organic esters e.g. butylacetate and ethers e.g.

diglyme. Generally, other additives used in oil exploration, oil drilling, tertiary oil recovery and oil pumping can be present in the oil-well treatment fluid. These other additives are described for example in Enhanced Recovery of Residual and Heavy Oils by M. M. Schumacher, Noyes Data Corporation, 1980 or Composition and Properties of Oil Well Drilling Fluids by W. F. Rogers, Gulf Publishing Company, 1953.

Typically, the well-treatment fluid is brought "down-hole" in the oil well by application techniques known to those skilled in the art and described in Petroleum Production Engineering, by L. C. Uren, McGraw-Hill 1953. Such application techniques include fluid injection, foam injection and the like.

The invention is further illustrated by the following non-limiting examples.

## Examples

The following test method can be used to evaluate the effectiveness of the foamable fluids of this invention at reducing or eliminating gasconing.

The duration of gas blockage can be measured according to a method described by Hanssen, e.g. in "Foams for Effective Gas Blockage in The Presence of Crude Oil" SPE/DOE 20193, p 211 (Studies of foams in porous media).

A porous media model was constructed by packing plastic chromatography columns with 80 to 105 $\mu$m diameter glass beads. The length of the columns was 200 $\mu$m, and they were dry packed by pouring the beads in the column while vibrating the column on a Vortex mixer. Absolute permeability of 5.5 $\mu$m$^2$ was achieved. The column was then flooded with an excess of the oil well treatment fluid. Foam is generated in the column by bubbling nitrogen into the column at constant pressure. The target pressure gradient for foam generation was 1.5 to 2 bar/m. After foam generation, the stabilized gas flow rate through the foam-filled column was measured as a function of pressure gradient. The pressure gradient was periodically increased (at stable flow and saturation conditions) in steps of about 1 bar/m. The column was maintained at 70°C during each test.

The number of days of gas blockage provided by a foam barrier prepared from the fluorochemical surfactant solution was determined to be the number of days the foam barrier limited the permeability of gas through the foam below 0.2 $\mu$m$^2$.

## Example 1

The following procedures were used to produce the novel fluorochemical surfactants of this invention. The surfactants were prepared by adding 50 g N-ethyl perfluorooctane sulfonamidoethyl methacrylate, 50 g octadecyl methacrylate, 70 g heptane, 30 g ethyl acetate and 1.5 azobisisobutyronitrile initiator to a 500 mL, three necked flask fitted with a stirrer, reflux condenser and thermometer. The reaction mixture was degassed three times by applying an aspirator and deaerating with nitrogen. The mixture was then heated to 65°C and reacted for 16 hours. Then an additional 0.2 g azobisisobutyronitrile was added to the reaction mixture and the reaction was allowed to continue for another 5 hours at 65°C. The progress of the reaction was monitored by measuring the concentration of the comonomers by gas chromatography. After the reaction was complete, a clear yellow-brown solution was obtained.

The examples 2 to 14 were prepared according to the procedure as described in example 1 with the modifications according to table 1.

Comparative example C1 was made as described above but with the addition of n-octylmercaptan (1.5g) as chain transfer agent.

Each of the fluorosurfactants were then dissolved in kerosene at elevated temperatures (i.e., up to 70°C) to prepare 1 weight percent surfactant solutions that were evaluated as foamable oil well treatment fluids. In Examples 4 and 5 20% by weight of the fluorosurfactant solution was diglyme.

The monomers used and their weight ratios, the amounts of initiator used, the weight average molecular weights of the fluorochemical surfactants are summarized in Table 1.

Table 1

| Example No. | Monomers [a] (gram) | Initiator (gram) | Weight Average molecular weight (Mw.)* |
|---|---|---|---|
| 1 | EtFOSEMA/ODMA=50/50 | 1.5 | 56,000 |
| 2 | EtFOSEMA/ODMA=50/50 | 0.3 | 87,000 |
| 3 | EtFOSEMA/ODMA=50/50 | 0.1 | 138,00 |
| 4 | MeFOSEMA/ODMA=50/50 | 0.2 | 130,000 |
| 5 | MeFOSEMA/ODMA=65/35 | 0.3 | 111,000 |
| 6 | MeFOSEMA/LMA=50/50 | 0.2 | 109,000 |
| 7 | EtFOSEMA/ODMA/ silicone MA=30/50/20 | 0.3 | 123,000 |
| 8 | EtFOSEMA/ODMA/ CW750A=50/40/10 | 0.3 | 121,000 |
| 9 | MeFOSEMA/ODMA/AA =65/30/5 | 0.75 | / |
| 10 | EtFOSEMA/ODMA/P144A =50/30/20 | 0.2 | / |
| 11 | EtFOSEMA/EHMA=65/35 | 0.3 | 105,000 |
| 12 | EtFOSEMA/ODMA/AA =50/45/5 | 0.3 | / |
| 13 | EtFOSEMA/ODMA/vinyl acetate = 50/45/5 | 0.3 | / |
| 14 | $R_f$-MA/ODMA 50/50 | 0.5 | / |
| 15 | EtFOSEMA/ODMA 50/50 + X-30483 50/50 | | |
| C1 | EtFOSEMA/ODMA 50/50 | 1.5 | 18,000 |

\* Polydispersity between 2.8 and 3.6 for all samples.

[a]In Table 1, the monomers used are abbreviated as follows:

"EtFOSEMA" is N-ethylperfluorooctane sulfonamido-ethylmethacrylate;

"MeFOSEMA" is N-methylperfluorooctane sulfonamido-ethylmethacrylate;

"MeFOSEA" is N-methylperfluorooctane sulfonamido-ethylacrylate;

"ODMA" is octadecylmethyacrylate;

"LMA" is dodecylmethacrylate;

"CW 750 A" is the acrylate of a methoxy polyethylene-glycol of average molecular weight of 750 (commercially available from Union Carbide);

"Pl 44 A" is the acrylate of an ethyleneoxide-propylene oxide-ethylenoxide glycol (commercially available as Pluronic 44 from BASF);

"AA" is acrylic acid;

"EHMA" is 2-ethylhexylmethacrylate;

"$R_f$-MA" is $C_nF_{2n+1}CH_2CH_2OC(O)C(CH_3)=CH_2$ where n= 6, 8, 10, 12 or 14, commercially available as Zonyl TM from Dupont.

"IEA" is isocyanatoethylacrylate;

"silicone MA" is a silicone macromer methacrylate (commercially available from Shin-Etsu as X-24- 82).

X-30483 is a silicone available from Dow Corning.

The fluorochemical surfactants of this invention, having a weight average Molecular Weight of at least 20,000, particularly of at least 50,000, can be used to make foamable, oil well treatment fluids having excellent gas blockage performance, compared to fluorochemical surfactants having a weight average Molecular Weight that is lower than 20,000.

Example 15

Example 15 was prepared by making a 50/50 blend by weight of the fluorosurfactant of example 3 with the silicone x-30483, commerically available from Dow Corning.

Examples 16 to 21

In the following examples, the gas blockage performance of certain foamable, oil well treatment fluids of this invention were evaluated. The fluids were prepared using known fluorochemical surfactants.

The compound of Example 16 ($C_8F_{17}CH_2CH_2SCH_2CH(CH_2OH)0-(CH_2CH_2O)_6(CH(CH_3)CH_2O)_{56}-(CH_2CH_2O)_6H$) was prepared according to the procedure described in Example 4 of U.S. Patent No. 4,997,580.

The composition of Example 17 ($R_f\{CH_2CH(CONH_2)_{17}\}I$) was prepared according to the procedure described in Example 45 of EP 0 189 698 B1. In the composition the perfluorinated substituent $R_f$ is represented by a mixture of 55.8% $C_6F_{13}$, 26.9% $C_8F_{17}$, 11.0% $C_{10}F_{21}$, 4.0% $C_{12}F_{25}$, 1.4% $C_{14}F_{29}$, 0.5%

$C_{16}F_{33}$, 0.2% $C_{18}F_{37}$.

The compound of Example 18 (terpolymer) was prepared according to the procedure described in Example 1 of U.S. Patent No. 4,900,569.

The compound of Example 19 ($C_6H_{13}C_2H_4OCH_2CH(CH_2Cl)O\text{-}CH_2\text{-}CH(OH)CH_2N(C_2H_4OH)_2$) was prepared according to the procedure described in Example 1 of EP 0 435 219 A2.

The compound of Example 20 was prepared according to the procedures described in Example 2 of U.S. Patent No. 4,973,413.

The compound of Example 21 ($C_8H_{17}CH_2CH_2SCH_2OCH_2CH_2OH$) was prepared according to the procedures described in Example 1 of U.S. Patent No. 4,266,080.

All of the compounds were dissolved in kerosene at elevated temperatures (i.e., up to 70°C) to produce 1 weight percent solutions of the compounds.

Examples 22-27 and Comparative Example C2

There is a relationship between the solubility of fluoro chemical surfactants used in this invention in heptane and the gas blockage performance of the foamable fluid containing that surfactant. Typical solubility data are summarized in Table 2.

Table 2

| Example[a] | Solubility (g/100g heptane) at 25°C | at 50°C |
|---|---|---|
| 22 | 1-5 | >10 |
| 23 | <1 | 1-5 |
| 24 | <0.1 | 0.1-0.5 |
| 25 | <0.1 | 0.1-0.5 |
| 26 | <0.1 | 0.1-0.5 |
| 27 | <0.1 | 0.1-0.5 |
| C2 | >10 | >10 |

[a] The following surfactants were used in the examples:
Example 22 used the surfactant of Example 1;
Example 23 used the surfactant of Example 2;
Example 24 used the surfactant of Example 3;
Example 25 used the surfactant of Example 5;
Example 26 used the surfactant of Example 7;
Examples 31 used the surfactant of Example 11;
Comparative Example C2 used the surfactant of comparative example C1.

Preferably, the fluorochemical surfactants used in this invention should not be too soluble (e.g., capable of forming a solution of more than 10 weight percent in heptane at typical oil well temperatures) or the gas blockage performance of the resulting foam barrier will be adversely impacted.

**Claims**

**1.** A foamable, oil well treatment fluid comprising at least one fluorochemical surfactant that is:
a) substantially soluble in crude oil, and
b) substantially insoluble in water,
wherein the fluid is capable of forming a foam barrier under typical oil well conditions that is effective in reducing gasconing for at least four days.

**2.** A foamable, oil well treatment fluid according to claim 1 wherein the fluid is capable of forming a foam barrier under typical oil well conditions that is effective at reducing gasconing for at least 10 days.

3. A foamable, oil well treatment fluid according to any of claims 1 to 2 wherein not more than one hundred grams of the fluorochemical surfactants are dissolvable in one thousand grams of a nonpolar liquid at temperatures between 30 to 100°C.

4. A foamable, oil well treatment fluid according to any of claims 1 to 3 wherein the fluorochemical surfactants contain from 5 to 80 % by weight of organically bonded fluorine.

5. A foamable, oil well treatment fluid according to any of claims 1 to 4 wherein the fluorochemical surfactants have a weight average molecular weight of at least 20,000 and consist essentially of interpolymerized units derived from the following comonomers:

$$R_fQCR^{1}=CR^2R^3 \qquad (I)$$

where:
$R_f$ is a fluoroaliphatic radical,
Q is an organic linking group and
$R^1$, $R^2$ and $R^3$ are independently selected from the group consisting of hydrogen, halogen atoms, phenyl radicals, lower alkyl radicals and combinations thereof, and

$$R_HCR^1 = CR^2R^3 \qquad (II)$$

where:
$R_H$ is an essentially fluorine-free radical, and
$R^1$, $R^2$ and $R^3$ are as defined above.

6. The oil-well treatment fluid of claim 1 optionally further comprising at least one additive including foam stabilizers, foam extenders, viscosifiers and co-solvents.

7. A fluorochemical surfactant having a weight average molecular weight of at least 20,000 and consisting essentially of interpolymerized units derived from the following comonomers:

$$R_fQCR^1 = CR^2R^3 \qquad (I)$$

where:
$R_f$ is a fluoroaliphatic radical,
Q is an organic linking group and
$R^1$, $R^2$ and $R^3$ are independently selected from the group consisting of hydrogen, halogen atoms, phenyl radicals, lower alkyl radicals and combinations thereof, and

$$R_HCR^1 = CR^2R^3 \qquad (II)$$

where:
$R_H$ is an essentially fluorine-free radical, and $R^1$, $R^2$ and
$R^3$ are as defined above.

8. The fluorochemical surfactant of claim 7 wherein the fluorine containing ethylenically unsaturated monomer of formula (I) is a substituted N-perfluoroalkanesulfonamido alkylacrylate or methacrylate or a perfluoroalkane alkylacrylate or methacrylate.

9. Use of the oil-well treatment fluid of claims 1 - 6 for forming a foam barrier under typical oil well conditions that is effective in reducing gasconing for at least four days.

10. Use of the fluorochemical surfactant of claim 7 in a foamable oil-well treatment fluid of claims 1 - 6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 903 771 (J.E.HANSSEN)<br>* claims 1,3,5,6 *<br>--- | 1-10 | E21B33/138<br>E21B43/32<br>B01F17/00<br>C08F220/38 |
| D,Y | US-A-4 557 837 (H.B.CLARK II)<br>* column 2, line 55 - column 3, line 23 *<br>* column 4, line 1 - line 3 *<br>* column 9, line 47 - column 12, line 35 *<br>--- | 1,4-10 | |
| Y | GB-A-2 116 227 (HALLIBURTON)<br>* page 2, line 34 - line 42; claim 1 *<br><br>----- | 1-4,9,10 | |

TECHNICAL FIELDS
SEARCHED (Int. Cl.5)

E21B
B01F
C08F

The present search report has been drawn up for all claims

| Place of search | Date of completion of the search | Examiner |
|---|---|---|
| THE HAGUE | 14 OCTOBER 1993 | ROTSAERT L.D.C. |

EPO FORM 1503 03.82 (P0401)